# EUROPÄISCHE PATENTSCHRIFT

(11) **EP 0 508 043 B1**
(45) Veröffentlichungstag und Bekanntmachung des Hinweises auf die Patenterteilung: **13.03.1996**
(21) Anmeldenummer: 92100781.1
(22) Anmeldetag: 18.01.1992
(51) Int. Cl.: B29C 45/23

(54) **Düse am Plastifizierzylinder einer Kunststoff-Spritzgiesseinheit**
Nozzle for plasticising cylinder of a plastic injection moulding machine
Buse pour cylindre de plastification d'une machine à mouler par injection de matières plastiques

(30) Priorität: 06.04.1991 DE 4111164
(43) Veröffentlichungstag der Anmeldung: 14.10.1992
(73) Patentinhaber: Hehl, Karl, D-72290 Lossburg (DE)
(72) Erfinder: Hehl, Karl, D-72290 Lossburg (DE)
(74) Vertreter: Reinhardt, Harry

(56) Entgegenhaltungen:
- DE-B- 1 167 008
- DE-B- 1 217 597
- US-A- 3 396 431
- US-A- 3 401 426
- US-A- 3 902 665
- PATENT ABSTRACTS OF JAPAN vol. 10, no. 126 (M-477)(2183) 10. Mai 1986 & JP-A-60 253 522 (SUMITOMO BAKELITE)

## Beschreibung

Die Erfindung betrifft eine offene Düse mit zentralem Düsenkanal nach dem Oberbegriff des Anspruches 1.

Unter "offener Düse" im obigen Sinn ist eine Düse zu verstehen, die ohne eine die Düsenmündung bedarfsweise abschließende Verschlußnadel arbeitet, wobei nach dem Dekompressionshub dank einer Aufhebung der Kompression im plastifizierten Material bzw. dank eines begrenzten Unterdruckes im plastifizierten Material dieses auch nach Absetzen der Düse von der Spritzgießform aus der Düse nicht austritt.

Unter "Absetzen der Düse" im obigen Sinne wird eine axiale Bewegung des Plastifizierzylinders verstanden, bei der die Anlagefläche der Düse im Abstand von der Spritzgießform gelangt.

Derartige offene Düsen sind zur Benutzung in einer Kunststoff-Spritzgießeinheit bestimmt und geeignet, welche das Kunststoffmaterial im Verlauf eines Spritzzyklus wie folgt aufbereitet und einspritzt: Ein vorbestimmtes Quantum an Kunststoffmaterial mit oder ohne spezifische Zusätze wird von der im Plastifizierzylinder rotierenden Förderschnecke fortlaufend plastifiziert. Ein Austreten des plastifizierten Materials aus der Düse wird dabei dadurch verhindert, daß diese mit ihrer Anlagefläche an der durch den Anguß eines fertigen Spritzlings bzw. durch den Spritzling selbst geschlossenen Angußöffnung der Spritzgießform anliegt. Danach wird das von der Förderschnecke plastifizierte Kunststoffmaterial mit Hilfe eines nach rückwärts gerichteten Hubes (Dekompressionshub) der Förderschnecke dekomprimiert. Die Dekomprimierung hat zur Folge, daß das plastifizierte Material auch nach Absetzen der Düse von der Spritzgießform dank der Beseitigung des Überdruckes bzw. des Auftretens eines begrenzten Unterdruckes aus der Düse nicht austritt. Insgesamt arbeitet die Kunststoff-Spritzgießeinheit in folgenden Schritten: Anlegen der Düse; Einspritzen des in einem vorausgegangenen Spritzzyklus plastifizierten Materials durch einen Axialhub der Förderschnecke; Plastifizieren des vorbestimmten Kunststoffquantums; Dekompression des plastifizierten Kunststoffes; Absetzen der Düse von der Spritzgießform für eine Zeitspanne, in welcher der zuvor in der Spritzgießform gebildete Spritzling abkühlt und entformt wird; erneutes Anlegen der Düse und Einspritzen des plastifizierten Kunststoffes.

Bei derartigen offenen Düsen treten verschiedentlich unerwünschte partielle, strukturelle und farbliche Veränderungen am fertigen Spritzling, z.B. Schlieren, auf. Diese sind auf unterschiedliche Ursachen, z.B. auf partielle Überhitzung bei Aufbereitung des Kunststoffes im Plastifizierzylinder oder Verunreinigungen usw. zurückzuführen. In langfristigen Beobachtungen wurde erkannt, daß solche Veränderungen zu vermeiden sind, wenn man den plastifizierten Kunststoff im Bereich der offenen Düse gegenüber der Atmosphäre abschirmt. Daraus kann gefolgert werden, daß als Ursache für die genannten Veränderungen auch komplexe, im einzelnen nicht abgeklärte Oxydationsprozesse, aber auch das Eindringen von Wasserdampf in die Kunststoffschmelze in Betracht kommen können.

Zur Lösung dieser Probleme wurde in der dem Oberbegriff zugrundeliegenden US-A 3,902,665 bereits vorgeschlagen, im Düsenkanal einen Torpedo in einer Aufweitung des Düsenkanals stationär anzuordnen. In dem Torpedo wird dabei ein pneumatisch arbeitender Zylinder ausgebildet, dessen Kolbenstange zugleich der Verschlußkörper zum Verschluß des Düsenkanals ist. Dadurch ist zwar gezielt ein Verschluß des Düsenkanals zu bewirken, wann immer es erwünscht ist, jedoch erfolgt dieser Verschluß nicht allein infolge des axialen Rückhubes des Fördermittels. Vielmehr sind hier gesonderte Antriebsmittel für den Verschlußkörper erforderlich, so daß diese Düse auch als Verschlußdüse betrieben werden kann, andererseits aber durch diese Ausführungsform verteuert wird. Die Verschlußnadel ist dabei weit entfernt vom gießformseitigen Ende des Düsenkanals angeordnet, so daß es selbst in Verschlußposition des Verschlußkörpers noch zu unerwünschten Einflüssen auf das Kunststoffmaterial in dem Bereich kommen kann, in dem es der Atmosphäre noch ausgesetzt ist.

Aus der JP-A 60-253522 ist ferner eine offene Düse bekannt, die in ihrer vorderen Position ein Überströmen von Kunststoffmaterial zuläßt und ihrer rückwärtigen Position den Düsenkanal verschließt. Der Verschluß erfolgt hier zwar in einem düsennahen Bereich, jedoch genügt der Rückhub des Fördermittels für die Verschlußbewegung alleine nicht aus. Zur Erzielung der Verschlußbewegung wird vielmehr eine Feder angeordnet, die sich in einem Ringraum zwischen Verschlußkörper und Wandung des Düsenkanals befindet. Insofern ist nicht allein der Rückhub geeignet, den Verschluß zu bewirken, und es kann sowohl zu Störungen beim Verschluß als auch zu den oben erwähnten unerwünschten Begleiterscheinungen im Material selbst kommen, da einerseits im Bereich der Feder auf Dauer kein dichter Verschluß gewährleistet ist und andererseits die Feder beständig hohen Temperaturen ausgesetzt ist, die die Zuverlässigkeit ihrer Wirkung herabsetzen.

Der Erfindung liegt die Aufgabe zugrunde, eine Düse derart weiterzubilden, daß die genannten strukturellen und/oder farblichen Veränderungen am Spritzling auf einfachste Weise zuverlässig vermieden werden können.

Diese Aufgabe wird durch die Merkmale des Anspruches 1 gelöst.

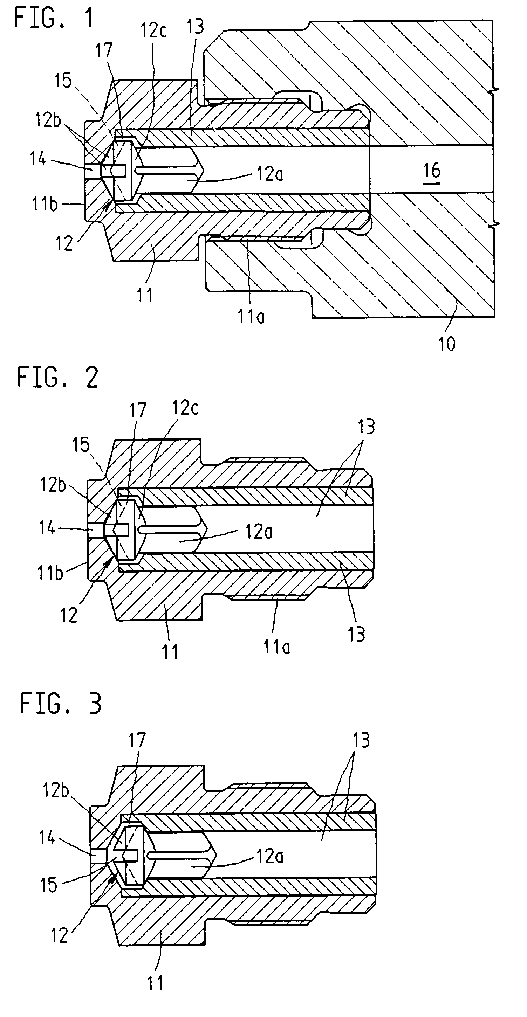

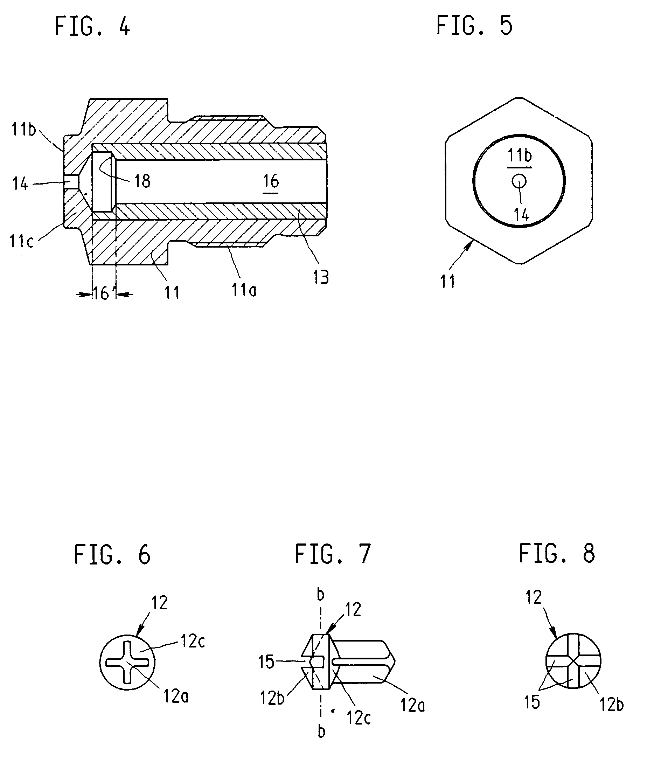

Bei einer solchen Düse ist der Verschlußkörper in einer vorderen Position (Fig. 1, 2) an entsprechenden Stützflächen des Düsenmundstückes abgestützt, wenn die rotierende und zurückweichende Förderschnecke das Kunststoffmaterial plastifiziert und vor sich ansammelt. In dieser Position (Einspritzposition) des Verschlußkörpers ist eine Einspritzung des Kunststoffes möglich, weil der plastifizierte Kunststoff den Verschlußkörper umströmen und dadurch zur Düsenmündung gelangen kann. Beim Dekompressionshub wird der Verschlußkörper im Gefolge eines geringfügigen Unterdruckes im plastifizierten Kunststoff in seine rückwärtige Verschlußposition überführt, in welcher er mit der Mantelfläche seines rückwärtigen kegelförmigen Endes an der Schulter der Hülse anliegt und dadurch den Düsenkanal stirnseitig abschließt (Fig. 3). Insoweit stellt der Verschlußkörper einen ohne weitere Hilfsmittel automatisch arbeitenden Dekompressionsverschluß dar, der sicherstellt, daß das für die Einspritzung vorbereitete plastifizierte Material nach dem Dekompressionshub von atmosphärischen Einflüssen abgeschirmt ist, wenn die Düse von der Spritzgießform abgehoben ist.

Es hat sich gezeigt, daß bei einem solchen Dekompressionsverschluß der Verschlußkörper beim Überführen von seiner Einspritzposition in seine Verschlußposition an der Kunststoffschmelze haftet bzw. klebt. Die Haftwirkung ist durch die relativ große Haftfläche wesentlich verstärkt, welche durch die große Oberfläche des Ansatzes am Verschlußkörper gebildet ist. Dank der Haftwirkung kann auf einen Teil des sonst erforderlichen Dekompressionshubes verzichtet werden.

Letzterer kann soweit minimiert werden, daß er gerade noch zur Verschiebung des Verschlußkörpers aus seiner Einspritzposition in seine Verschlußposition ausreicht.

Die Erfindung wird dadurch nicht berührt, daß es bei speziellen Spritzgießmaschinen mit zwei gleichzeitig arbeitenden Plastifizierzylindern zur Herstellung von farbmarmorierten Spritzlingen, z.B. von Blumenblättern oder dergleichen bekannt ist, die Zufuhrkanäle aus beiden Plastifizierzylindern wechselweise mit einem fliegenden Verschlußkörper abzuschließen bzw. zu öffnen. Ein solches spezielles Düsensystem stellt sicher, daß Kunststoffe unterschiedlicher Farbe bzw. unterschiedlicher Struktur im periodischen Wechsel in den Formhohlraum der Spritzgießform gelangen (US-PS 4,190,409; 3,945,784).

Nachstehend wird die Erfindung anhand eines Ausführungsbeispiels erläutert.

Es zeigen:
- Fig. 1: den vorderen Teil der Düse im vertikalen Schnitt bei in Einspritzposition befindlichem Verschlußkörper,
- Fig. 2 und 3: den Düsenkopf der Düse bei in Einspritzposition und in Verschlußposition befindlichem Verschlußkörper in einer Darstellung entsprechend Fig. 1,
- Fig. 4, 5: den Düsenkopf gemäß Fign. 2, 3 ohne Verschlußkörper und in Seiten- und Stirnansicht und
- Fig. 6, 7, 8: den Verschlußkörper in Rückansicht, Seitenansicht und Stirnansicht.

Die Düse arbeitet ohne eine die Düsenmündung 14 bedarfsweise abschließende Verschlußnadel und wird daher als 'offene' Düse bezeichnet. Sie weist einen zentralen, zur Spritzachse koaxialen Düsenkanal 16 auf. Die Düse ist für den beheizbaren Plastifizierzylinder einer den plastifizierten Kunststoff in eine Spritzgießform einspritzenden Spritzgießeinheit bestimmt und geeignet. Im Plastifizierzylinder einer solchen Spritzgießeinheit wird der Kunststoff bei Anlage der Düse an der Angußöffnung der Spritzgießform von einer rotierenden Förderschnecke plastifiziert und danach durch einen axialen Rückhub (Dekompressionshub) dieser Förderschnecke derart dekomprimiert, daß er auch nach Absetzen der Düse von der Spritzgießform aus dem Düsenkanal 16 nicht austritt. In einem Endabschnitt 16' größerer lichter Weite des Düsenkanals 16 ist ein begrenzt axial bewegbarer Verschlußkörper 12 angeordnet. Dieser läßt in einer vorderen Position (Einspritzposition) ein Überströmen des plastifizierten Kunststoffes vom Düsenkanal 16 zur Düsenmündung 14 zu. In einer rückwärtigen Verschlußposition deckt der Verschlußkörper unter Wirkung des Dekompressionshubes den Düsenkanal 16 stirnseitig ab. Der in seiner Grundform etwa radialsymmetrische Verschlußkörper weist einen zylindrischen Mittelabschnitt auf und läuft beidseits in kegelförmige Endabschnitte 12d und 12c aus. Der vordere kegelförmige Endabschnitt 12b ist mit parallel zu seiner Mantelfläche verlaufenden Nuten 15 versehen.

Die Düse ist aus einem Düsenkörper 10, einem Düsenkopf 11 und einer den Düsenkanal 16 im Abschnitt des Düsenkopfes 11 begrenzenden zylindrischen Hülse 13 aufgebaut. Die lichte Weite der Hülse 13 entspricht der lichten Weite des Düsenkanals 16 im Abschnitt des Düsenkörpers 10. Die Hülse 13 begrenzt auch den vorderen Endabschnitt 16' größerer lichter Weite des Düsenkanals 16. Dieser Endabschnitt 16' weist eine als Sitz für den Verschlußkörper 12 dienende Schulter 18 auf. Im Bereich des Endabschnittes 16' größerer lichter Weite des Düsenkanals 16 ist zwischen der Hülse 13 und dem in Einspritzposition befindlichen Verschlußkörper 12 ein Ringraum 17 gebildet. Rückseitig ist der Verschlußkörper 12 mit einem im Düsenkanal 16 geführten Ansatz 12a mit kreuzförmigem Querschnittsprofil versehen. Dieser Ansatz 12a gewährleistet, daß die Bewegungen des Verschlußkörpers 12 aus seiner Einspritzposition in die Verschlußposition und umgekehrt streng axial verlaufen. Der mit einer planen Anlagefläche 11b versehene Düsenkopf 11 weist einen rückwärtigen Abschnitt geringeren Durchmessers auf, der mit einem Außengewinde 11a versehen ist. Dieses steht mit dem Innengewinde einer zentralen Bohrung des Düsenkörpers 10 in Eingriff. In Einspritzposition ist der Verschlußkörper 12 mit der Mantelfläche seines vorderen kegelförmigen Endabschnittes 12b von einer entsprechend geneigten Stützfläche 11c des Düsenkopfes 11 axial abgestützt. Befindet sich der Verschlußkörper 12 in Verschlußposition, so liegt die Mantelfläche seines rückwärtigen, kegelförmigen Endabschnittes 12c an der entsprechend geneigten Schulter 18 der Hülse 13 dichtend an.

Sieht man von den Nuten 15 und dem Ansatz 12a ab, so weist der radialsymmetrische, aus dem zylindrischen Mittelabschnitt und den beiden kegelförmigen Endabschnitten bestehende Grundkörper des Verschlußkörpers 12 eine rechtwinklig zur Achse der Düse verlaufende Symmetrieebene b-b auf, wie insbesondere aus Fig. 7 ersichtlich. Die kreuzweise angeordneten Nuten 15 erstrecken sich in den mittleren zylindrischen Abschnitt des Verschlußkörpers hinein. Sie enden jedoch im Abstand vom rückwärtigen kegelförmigen Endabschnitt 12c. Dadurch ist sichergestellt, daß die Eingänge zu den Nuten am Ringraum 17 mit vollem Durchflußquerschnitt offen sind, wenn der Verschlußkörper 12 sich in Einspritzposition (Fig. 1, 2) befindet. Die Stirnflächen der kegelförmigen Endabschnitte 12b, 12c schließen im zeichnerischen Ausführungsbeispiel zur Symmetrieebene b-b etwa einen Winkel von 28° ein. Da die Nuten durchgehend eine gleiche Tiefe aufweisen und parallel zu den Mantelflächen dieser Endabschnitte verlaufen, ergibt sich eine entsprechende Neigung auch für die Nuten 15. Die in radialer Richtung gemessene Tiefe des Ringraumes 17 beträgt etwa ein Viertel bis ein Drittel der lichten Weite der Düsenmündung 14.

Wie insbesondere aus Fig. 3 ersichtlich, liegt die Mantelfläche des kegelförmigen Endabschnittes 12c lediglich in einem relativ geringen Randbereich an der als Sitz dienenden Schulter 18 der Hülse 13 an, so daß sich unter der Wirkung des Dekompressionshubes eine ausreichend dichte Anlage des Verschlußkörpers 12 an der Schulter 18 ergibt.

## Patentansprüche

1. Offene Düse mit zentralem Düsenkanal (16) für den beheizbaren Plastifizierzylinder einer den plastifizierten Kunststoff in eine Spritzgießform einspritzenden Spritzgießeinheit, in welchem Plastifizierzylinder Kunststoff bei Anlage der Düse an der Angußöffnung der Spritzgießform von einer rotierenden Förderschnecke plastifiziert und danach durch einen axialen Rückhub dieser Förderschnecke dekomprimiert wird, wobei im Düsenkanal (16) ein begrenzt axial bewegbarer Verschlußkörper (12) angeordnet ist, der in einer vorderen Position ein Überströmen des plastifizierten Kunststoffes vom Düsenkanal (16) zur Düsenmündung (14) zuläßt und in einer rückwärtigen Verschlußposition auch nach Absetzen der Düse von der Spritzgießform den Düsenkanal (16) stirnseitig abschirmt,
dadurch gekennzeichnet, daß der Verschlußkörper (12) in einem Endabschnitt (16') größerer lichter Weite des Düsenkanals (16) der Düse nahe der Düsenmündung (14) lose eingelegt ist und allein unter der Wirkung des axialen Rückhubes den Düsenkanal (16) abschirmt.

2. Düse nach Anspruch 1, dadurch gekennzeichnet, daß der in seiner Grundform radialsymmetrische und in seinem Mittelabschnitt zylindrische Verschlußkörper (12) beidseits in kegelförmige Endabschnitte (12b; 12c) ausläuft.

3. Düse nach Anspruch 2, dadurch gekennzeichnet, daß der vordere kegelförmige Abschnitt (12b) mit parallel zu seiner Mantelfläche verlaufenden Nuten (15) versehen ist.

4. Düse nach einem der vorhergehenden Ansprüche, dadurch gekennzeichnet, daß die Düse aus einem Düsenkörper (10), einem Düsenkopf (11) und einer den Düsenkanal (16) im Abschnitt des Düsenkopfes (11) begrenzenden zylindrischen Hülse (13) aufgebaut ist, deren lichte Weite der lichten Weite des Düsenkanals (16) im Abschnitt des Düsenkörpers (10) entspricht.

5. Düse nach Anspruch 4, dadurch gekennzeichnet, daß die Hülse (13) auch den vorderen Endabschnitt (16') des Düsenkanals (16) begrenzt und dort eine als Sitz für den Verschlußkörper (12) dienende Schulter (18 in Fig. 4) aufweist.

6. Düse nach Anspruch 5, dadurch gekennzeichnet, daß im Bereich des vorderen Endabschnittes (16') des Düsenkanals (16) zwischen der Hülse (13) und dem in Einspritzposition befindlichen Verschlußkörper (12) ein Ringraum (17 in Fig. 1, 2) gebildet ist.

7. Düse nach einem der vorhergehenden Ansprüche, dadurch gekennzeichnet, daß der Verschlußkörper (12) rückseitig mit einem im Düsenkanal (16) führbaren Ansatz (12a) mit kreuzförmigem Querschnittsprofil versehen ist.

8. Düse nach einem der vorhergehenden Ansprüche, dadurch gekennzeichnet, daß der mit einer planen Anlagefläche (11b) versehene Düsenkopf (11) in einem rückwärtigen, mit Außengewinde (11a) versehenen Abschnitt geringeren Durchmessers mit dem Innengewinde einer zentralen Bohrung des Düsenkörpers (10) in Eingriff steht.

9. Düse nach einem der vorhergehenden Ansprüche, dadurch gekennzeichnet, daß der Verschlußkörper (12) in seiner Einspritzposition mit der Mantelfläche seines vorderen kegelförmigen Endabschnittes (12b) von einer entsprechend geneigten Stützfläche (11c in Fig. 4) des Düsenkopfes (11) axial abgestützt ist.

10. Düse nach einem der Ansprüche 5-9, dadurch gekennzeichnet, daß die Mantelfläche des Verschlußkörpers (12) im rückwärtigen kegelförmigen Endabschnitt (12c) bei Verschlußposition an der entsprechend geneigten Schulter (18 in Fig. 4) der Hülse (13) dichtend anliegt.

## Claims

1. Open nozzle comprising a central nozzle channel (16) and for use in connection with a heatable plasticizing zylinder of an injection unit for injecting plasticized plastic material into a mould, wherein in the plasticizing cylinder the plastic material is plasticized by a rotating feed screw during contact of the nozzle with the injection opening of the mold and is then decomprimized by an axial back stroke of the feed screw and wherein in the nozzle channel (16) a limited axially movable closing member (12) is arranged allowing the flow of plasticized plastic material from the nozzle channel (16) to a nozzle orifice (14) in a forward position and closing the nozzle channel (16) at its front end in a backward closing position even after removing the nozzle from the nozzle channel (16),
characterized in that the closing member (12) is loosely inserted into an end section (16') having increased width in the clear of the nozzle channel (16) of the nozzle near to the nozzle orifice (14) and that the closing of the nozzle channel (16) is solely effected by the axial back stroke.

2. Nozzle according to Claim 1, characterized in that the closing member (12) in its basic form is radial symmetrical and in its middle section cylindrical and terminats at both ends in conical end sections (12b; 12c).

3. Nozzle according to Claim 2, characterized in that the forward conical end section (12b) comprises grooves (15) extending parallely to its outer surface.

4. Nozzle according to one of the preceding Claims, characterized in that the nozzle comprises a nozzle body (10), a nozzle head (11) and a cylindrical sleeve (13) limiting the nozzle channel (16) in the region of the nozzle head (11), wherein the width in the clear of the sleeve (13) corresponds to the width in the clear of the nozzle channel (16) in the region of the nozzle body (10).

5. Nozzle according to Claim 4, characterized in that the sleeve (13) limits the forward end section (16') of the nozzle channel (16) also and comprises a shoulder (18 in Fig. 4) there as seat for the closing member (12).

6. Nozzle according to Claim 5, characterized in that an annular space is constituted in the region of the forward end section (16') of the nozzle channel (16) between the sleeve (13) and the closing member (12) being in its injection position.

7. Nozzle according to one of the preceding Claims, characterized in that at its backward end the closing member (12) comprises an attachment (12a) cross-shaped in cross-section and guided in the nozzle channel (16 ).

8. Nozzle according to one of the preceding Claims, characterized in that the nozzle head (11) comprises a plan contact surface (11b) and a backwardly facing section having reduced diameter and comprising an outer thread (11a) cooperating with an inner thread of a central bore of the nozzle body (10).

9. Nozzle according to one of the preceding Claims, characterized in that in its injection position the closing member (12) via the outer surface of its forward conical end section (12b) is axially supported by a correspondingly inclined supporting surface (11c in Fig. 4) of the nozzle head (11).

10. Nozzle according to one of the Claims 5 to 9, characterized in that in closing position the outer surface of the closing member (12) in the backward conical end section (12c) is in tightened contact with the correspondingly inclined shoulder (18 in Fig. 4) of the sleeve (13).

## Revendications

1. Buse ouverte à canal central (16) pour le cylindre de plastification chauffable d'un groupe de moulage par injection injectant la matière synthétique plastifiée dans un moule d'injection, cylindre de plastification dans lequel la matière synthétique est, avec appui de la buse contre l'entrée du moule d'injection, plastifiée par une vis transporteuse tournante et ensuite décomprimée par une course de retour de cette vis transporteuse, tandis que dans le canal (16) de la buse, est placé un obturateur mobile axialement de façon limitée (12) qui, dans une position avant, permet le passage de la matière synthétique plastifiée du canal (16) à l'orifice (14) de la buse et, dans une position arrière de fermeture, même après enlèvement de la buse du moule d'injection, masque frontalement le canal (16) de la buse,
caractérisée en ce que l'obturateur (12) est monté libre dans une partie d'extrémité (16') de plus grand diamètre du canal (16) de la buse près de l'orifice (14) de celle-ci et masque le canal (16) de la buse uniquement sous l'action de la course axiale de retour.

2. Buse selon la revendication 1, caractérisée en ce que l'obturateur (12), de forme générale symétrique radialement et cylindrique dans sa partie médiane, se termine des deux côtés par une partie d'extrémité conique (12b ; 12c).

3. Buse selon la revendication 2, caractérisée en ce que la partie conique avant (12b) est pourvue de rainures (15) s'étendant parallèlement à sa surface latérale.

4. Buse selon l'une des revendications précédentes, caractérisée en ce qu'elle est constituée d'un corps (10), d'une tête (11) et d'une douille cylindrique (13) délimitant son canal (16) dans la zone de la tête (11) et dont le diamètre intérieur correspond au diamètre intérieur du canal (16) dans la zone du corps (10).

5. Buse selon la revendication 4, caractérisée en ce que la douille (13) délimite aussi la partie d'extrémité avant (16') du canal (16) de la buse et y présente un épaulement (18 sur la fig. 4) qui sert de siège pour l'obturateur (12).

6. Buse selon la revendication 5, caractérisée en ce que dans la zone de la partie d'extrémité avant (16') du canal (16) de la buse est formé entre la douille (13) et l'obturateur (12) en position d'injection un espace annulaire (17 sur les fig. 1 et 2).

7. Buse selon l'une des revendications précédentes, caractérisée en ce que l'obturateur (12) est pourvu sur le côté arrière d'un appendice (12a) à profil de section en forme de croix qui peut passer dans le canal (16) de la buse.

8. Buse selon l'une des revendications précédentes, caractérisée en ce que sa tête (11), pourvue d'une face d'appui plane (11b), est en prise, dans une partie arrière de plus petit diamètre pourvue d'un filetage extérieur (11a), avec le filetage intérieur d'un alésage central du corps (10) de la buse.

9. Buse selon l'une des revendications précédentes, caractérisée en ce que l'obturateur (12), dans sa position d'injection, est supporté axialement par la surface latérale de sa partie d'extrémité conique avant (12b) par une surface d'appui inclinée de façon correspondante (11c sur la fig. 4) du corps (11) de la buse.

10. Buse selon l'une des revendications 5 à 9, caractérisée en ce que la surface latérale de l'obturateur (12) dans la partie d'extrémité conique arrière (12c), dans la position de fermeture, s'appuie de façon étanche contre l'épaulement incliné de façon correspondante (18 sur la fig. 4) de la douille (13).
